# FASCICULE DE BREVET EUROPEEN

(11) **EP 4 283 110 B1**
(45) Date de publication et mention de la délivrance du brevet: **09.07.2025**
(21) Numéro de dépôt: 23174414.5
(22) Date de dépôt: 22.05.2023
(51) Int. Cl.: F02M 35/10, F16L 27/02, F16L 27/12, F16L 37/52, F16L 47/18, F16L 37/50, F16L 37/53, F16L 37/098

(54) **ENSEMBLE DE CONDUITS ÉQUIPÉS D'UN MOYEN DE RETENUE DES CONDUITS ET MOTEUR ASSOCIÉ**
LEITUNGSANORDNUNG MIT MITTELN ZUR HALTERUNG VON LEITUNGEN UND MOTOR DAMIT
DUCT ASSEMBLY WITH DUCT RESTRAINING MEANS AND ENGINE THEREWITH

(30) Priorité: 24.05.2022 FR 2205001
(43) Date de publication de la demande: 29.11.2023
(73) Titulaire: Renault s.a.s, 92100 Boulogne Billancourt (FR)
(72) Inventeur: Da Silva, Paulo, 78084 Guyancourt (FR); Petit, Jerome, 78084 Guyancourt (FR)

(56) Documents cités:
- EP-A1- 2 957 809
- WO-A1-2020/201474
- DE-A1- 102018 212 375

## Description

### Domaine technique

L'invention concerne, de manière générale, les moteurs, notamment de véhicule automobile, et se rapporte plus particulièrement à un moyen de retenue de deux conduits entre eux.

### Techniques antérieures

Dans l'industrie automobile, il est courant que le moteur d'un véhicule automobile soit équipé d'un ou plusieurs ensembles de conduits assemblés par emboitement.

Par exemple, le document EP 2 957 809 A1 décrit un élément de couplage pour la connexion de deux conduits de guidage de fluides.

Les vibrations engendrées lors du fonctionnement du moteur peuvent introduire un déplacement relatif des pièces susceptible d'altérer l'assemblage. De plus, l'assemblage de conduits par emboitement révèle régulièrement des défauts de mise en position des pièces tels que des défauts d'alignement. Il est donc nécessaire que les conduits puissent effectuer un mouvement de translation et de rotation entre eux afin de compenser ces défauts de mise en position et de déplacements, et afin d'aider à l'assemblage et au désassemblage du système.

En particulier, certains moteurs actuels sont équipés d'un système d'arrivée d'air, qui constitue un ensemble de conduits emboîtés dont une première extrémité prend naissance à la sortie d'un compresseur d'un turbocompresseur de suralimentation du moteur, et dont l'autre extrémité débouche à l'entrée d'un boîtier papillon du moteur.

Aussi, le fonctionnement du moteur ne doit pas provoquer de désassemblage des conduits, ce qui pourrait être très dangereux pour la sécurité des passagers.

Enfin, il est nécessaire que l'assemblage des conduits soit aisé afin de faciliter le travail de montage et le rendre plus rapide.

La présente invention a donc pour but de pallier les inconvénients précités et de proposer un système de conduits creux comprenant un moyen de retenue de deux conduits entre eux qui autorise un mouvement de rotation partielle et de translation entre les deux conduits, un assemblage aisé et une bonne tenue pendant le fonctionnement du moteur.

L'invention a donc pour objet un ensemble de conduits creux comprenant un premier conduit creux et un deuxième conduit creux assemblés entre eux par emboîtement partiel du deuxième conduit dans une portion du premier conduit, l'ensemble de conduits comprenant un moyen de retenue du premier conduit au deuxième conduit.

En particulier, le moyen de retenue est configuré pour permettre un mouvement de rotation partielle et un mouvement de translation du deuxième conduit par rapport au premier conduit.

Selon l'invention, le moyen de retenue comprend une excroissance disposée sur le deuxième conduit et un moyen de blocage disposé sur le premier conduit.

Le moyen de blocage comprend une première branche et une deuxième branche sensiblement parallèles entre elles, la première et la deuxième branches enserrant l'excroissance entre elles.

De plus, la première branche comprend une première languette de retenue et la deuxième branche comprend une deuxième languette de retenue, les première et deuxième languettes de retenues étant aptes à créer un rétrécissement local de l'espace entre les branches dans lequel est introduite l'excroissance et ainsi empêcher l'échappement de l'excroissance hors d'entre les branches.

De manière préférentielle, l'excroissance est un pion cylindrique.

Dans un mode de réalisation, l'excroissance est en forme de cylindre de révolution.

Dans un mode de réalisation, l'excroissance comprend une première patte et une deuxième patte reliées entre elles par une extrémité commune de sorte que le pion a une forme de « V », l'extrémité commune des deux pattes étant disposée en regard de la portion du premier conduit.

Avantageusement, le moyen de retenue est configuré pour permettre un mouvement de rotation d'environ deux degrés un mouvement de translation d'environ 6 millimètres du deuxième conduit par rapport au premier conduit.

L'invention a également pour objet un moteur comprenant un système d'alimentation en air comprenant une première extrémité reliée à la sortie d'un compresseur d'un turbocompresseur de suralimentation du moteur et une deuxième extrémité reliée à l'entrée d'un boîtier papillon du moteur, le système d'alimentation d'air comprenant un ensemble de conduits creux tel que défini ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig1] illustre un premier mode de réalisation d'un ensemble de conduit selon l'invention ;
[Fig2] illustre un deuxième mode de réalisation d'un ensemble de conduit selon l'invention ;

### Exposé de l'invention

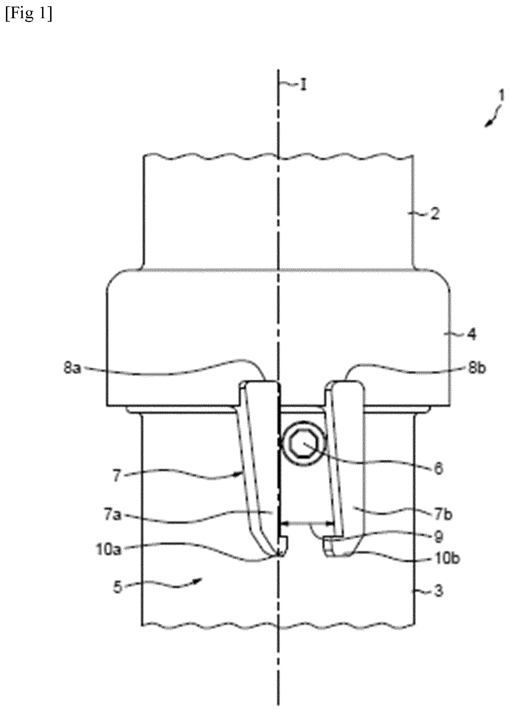

On a représenté schématiquement sur la figure 1 un ensemble de conduits 1 selon l'invention. L'ensemble de conduits 1 comprend un premier conduit 2 et un deuxième conduit 3 assemblés entre eux par emboîtement. En particulier, le deuxième conduit 3 est partiellement emboité dans une portion 4 du premier conduit 2. Cette portion 4 constitue de façon connue une rotule du premier conduit 2, et enserre une extrémité du deuxième conduit 3 pour positionner et lier les deux conduits 2 et 3 ensembles. La portion 4 est une extrémité du premier conduit 2.

Par exemple, l'ensemble de conduits 1 est un système d'arrivée d'air d'un moteur de véhicule automobile représenté partiellement, et le premier conduit 2 peut être une bride de fixation à un boîtier-papillon du moteur ou à un compresseur d'un turbocompresseur de suralimentation du moteur, le deuxième conduit 3 pouvant être un conduit central reliant les deux brides de fixation précédemment citées. Toutefois, l'ensemble de conduits 1 peut être n'importe quel ensemble de conduit comprenant au moins deux conduits.

L'ensemble de conduit 1 comprend un moyen de retenue 5 du deuxième conduit au premier conduit qui est configuré pour permettre un mouvement de rotation partielle et/ou un mouvement de translation du deuxième conduit 3 par rapport au premier conduit 2.

Plus particulièrement, le moyen de retenue 5 comprend une excroissance 6 et un moyen de blocage 7.

L'excroissance 6 est disposée sur l'un des deux conduits 2 ou 3, et le moyen de blocage 7 est disposé sur l'autre conduit 2 ou 3. Sur la figure 1, l'excroissance 6 est disposée sur le deuxième conduit 3 et le moyen de blocage 7 est disposé sur le premier conduit 2, et plus précisément sur la portion 4 du premier conduit 2 destinée à enserrer l'extrémité du deuxième conduit 3.

Le moyen de blocage 7 comprend une première branche 7a et une deuxième branche 7b sensiblement parallèles entre elles et à un axe d'assemblage I qui définit un axe d'emboîtement des conduits 2 et 3 entre eux. Chacune des branches 7a et 7b s'étend depuis la portion 4 vers le deuxième conduit 3 dans la direction de l'axe d'assemblage I. La branche 7a comprend ainsi une première extrémité 8a fixée à la portion 4, et la branche 7b comprend aussi une première extrémité 8b fixée à la portion 4.

Les branches 7a et 7b sont disposées de façon à définir un espace 9 entre les branches dans lequel est introduite l'excroissance 6.

L'espace 9 est assez large pour accueillir l'excroissance 6 et permettre un mouvement de rotation faible du deuxième conduit 3 par rapport au premier conduit 2. L'excroissance 6 est un pion cylindrique apte à coulisser entre les branches 7a et 7b du moyen de blocage 7, c'est-à-dire selon l'axe d'assemblage I. Il peut s'agir d'un cylindre de révolution ou ayant une autre section, par exemple ovale, hexagonale, octogonale, etc. La première branche 7a comprend une première restriction 10a et le deuxième branche 7b comprend une deuxième restriction 10b. La première restriction 10a est située sur une extrémité axiale opposée à la première extrémité 8a de la première branche 7a. De même, la deuxième restriction 10b est située sur une extrémité axiale opposée à la première extrémité 8b de la première branche 7b. Les restrictions 10a et 10b constituent ainsi l'extrémité des branches 7a et 7b, et définissent un rétrécissement local de l'espace 9 de sorte que la distance radiale entre les restrictions 10a et 10b est inférieure à la largeur d'au moins une portion de l'excroissance 6. En d'autres termes, les restrictions 10a et 10b constituent des languettes de retenue de l'excroissance 6 entre les branches 7a et 7b.

De cette manière, l'excroissance 6 peut coulisser entre les branches 7a et 7b mais ne peut coulisser entre les restrictions 10a et 10b. En effet, l'excroissance 6 coulissant jusqu'aux extrémités des branches 7a et 7b portant les restrictions 10a et 10b vient en butée contre ces restrictions 10a et 10b.

Les première et deuxième restrictions 10a et 10b sont donc aptes à empêcher l'échappement de l'excroissance 6 hors de l'espace 9 entre les branches 7a et 7b lors du fonctionnement du moteur.

Du côté des branches 7a et 7b opposées aux restrictions 10a et 10b, le coulissement de l'excroissance 6 est limité axialement par la portion 4 enserrant le premier conduit 2. Ainsi, le coulissement axial de l'excroissance 6 entre les branches 7a et 7b du moyen de blocage 7 est limité. Le coulissement axial de l'excroissance 6 correspond à un mouvement de translation d'un des deux conduits 2 et 3 par rapport à l'autre. Ainsi, le deux conduits 2 et 3 sont aptes à coulisser l'un par rapport à l'autre dans la limite de la distance entre la portion 4 et les restrictions 10a et 10b.

Par exemple, cette distance est d'environ 6 millimètres de sorte que le moyen de retenue 5 est configuré pour permettre un mouvement de translation d'environ 6 millimètres du deuxième conduit 3 par rapport au premier conduit 2.

La largeur maximale de l'excroissance 6 est inférieure de quelques millimètres à la largeur de l'espace 9 en dehors des restrictions 10a et 10b, de sorte que l'un des conduit 2 ou 3 peut réaliser un mouvement de rotation limité par rapport à l'autre conduit 2 et 3. En particulier, le moyen de retenue 5 et donc la largeur de l'excroissance 6 sont configurés pour permettre une rotation faible d'environ deux degrés d'un des conduits 2 et 3 par rapport à l'autre des conduits 2 et 3. En effet, lorsque un premier conduit 2 ou 3 subit une rotation inférieure à 2 degrés par rapport à l'autre conduit, les branches 7a et 7b ou l'excroissance 6 subissent un mouvement libre de tout obstacle. Or, si la rotation est plus importante, l'excroissance 6 entre en butée contre l'une des branches 7a et 7b, ce qui bloque le mouvement de rotation.

L'importance de la rotation possible est donc déterminée par la relation entre la largeur de l'espace 9 et la largeur de l'excroissance 6.

Dans le premier mode de réalisation illustré sur la figure 1, l'excroissance 6 est un pion cylindrique, par exemple de section hexagonale.

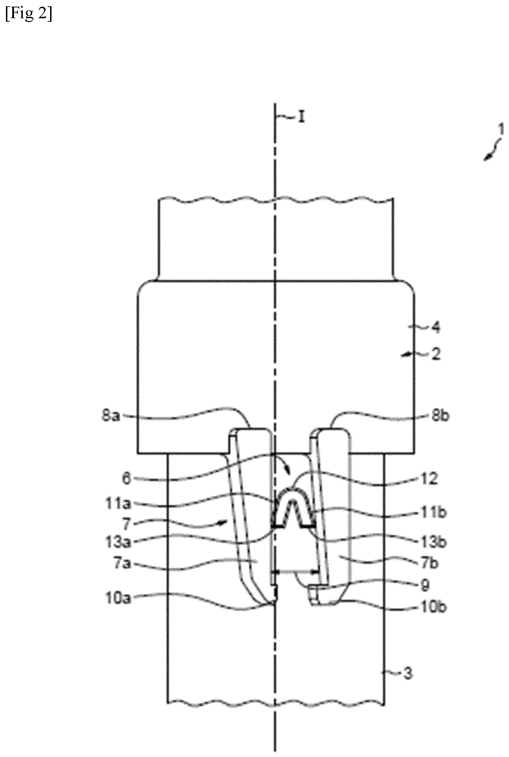

La figure 2 illustre un deuxième mode de réalisation particulièrement avantageux dans lequel l'excroissance 6 comprend une première patte 11a et une deuxième patte 11b reliées entre elles par une extrémité commune 12 de sorte que l'excroissance 6 a une forme de « V ».

L'extrémité commune 12 est le point de l'excroissance 6 le plus proche de la portion 4 du premier conduit 2, et est donc en regard de la portion 4. La patte 11a comprend une extrémité 13a opposée à l'extrémité commune 12, et la patte 11b comprend une extrémité 13b opposée à l'extrémité commune 12, la distance entre les deux extrémité 13a et 13b étant par conséquent la partie de l'excroissance 6 en forme de « V » la plus large.

Ainsi, la forme en « V » de l'excroissance 6 facilite non seulement le montage de l'ensemble de conduits 1, mais aussi elle empêche le désassemblage des conduits une fois que ceux-ci sont assemblés avec une meilleure efficacité que l'excroissance de la figure 1.

En effet, lors de l'assemblage des deux conduits 2 et 3, les branches 7a et 7b entrent d'abord en contact avec une partie plus étroite de l'excroissance 6, car plus proche de l'extrémité commune 12, et les restrictions 10a et 10b peuvent glisser et s'écarter progressivement au contact de l'excroissance 6 jusqu'au verrouillage consistant en un dépassement axial de l'excroissance 6 par le moyen de blocage 7, et plus précisément en un dépassement des extrémités libres 13a et 13b des deux pattes 11a et 11b par les restrictions 10a et 10b. Ensuite, lorsque ce dépassement est effectué, un mouvement inverse des branches 7a et 7b provoque la butée des restrictions 10a et 10b contre les extrémités libres 13a et 13b qui constituent la partie la plus large de l'excroissance 6 et bloquent donc le retour des branches 7a et 7b.

De plus, la forme en « V » de l'excroissance permet toujours la translation et la rotation des conduits 2 et 3 l'un par rapport à l'autre.

## Revendications

1. Ensemble de conduits creux (1) comprenant un premier conduit creux (2) et un deuxième conduit creux (3) assemblés entre eux par emboîtement partiel du deuxième conduit (3) dans une portion (4) du premier conduit (2), l'ensemble de conduits (1) comprenant un moyen de retenue (5) du premier conduit au deuxième conduit, selon lequel le moyen de retenue (5) est configuré pour permettre un mouvement de rotation partielle et un mouvement de translation du deuxième conduit (3) par rapport au premier conduit (2), ledit moyen de retenue (5) comprenant une excroissance (6) disposée sur le deuxième conduit (3) et un moyen de blocage (7) disposé sur le premier conduit (2), ce moyen de blocage (7) comprenant une première branche (7a) et une deuxième branche (7b) sensiblement parallèles entre elles, la première et la deuxième branches (7a et 7b) enserrant l'excroissance (6) entre elles, **caractérisé en ce que** la première branche (7a) comprend une première languette de retenue (10a) et la deuxième branche (7b) comprend une deuxième languette de retenue (10b) aptes à créer un rétrécissement local de l'espace (9) entre les branches (7a et 7b) dans lequel est introduite l'excroissance (6) et ainsi empêcher l'échappement de l'excroissance (6) hors d'entre les branches (7a et 7b).

2. Ensemble de conduits creux (1) selon la revendication 1, dans lequel l'excroissance (6) est un pion cylindrique.

3. Ensemble de conduits creux (1) selon la revendication 2, dans lequel l'excroissance (6) est en forme de cylindre de révolution.

4. Ensemble de conduits creux selon la revendication 2, dans lequel l'excroissance (6) comprend une première patte (11a) et une deuxième patte (11b) reliées entre elles par une extrémité commune (12) de sorte que l'excroissance (6) a une forme de « V », l'extrémité commune (12) des deux pattes (11a et 11b) étant disposée en regard de la portion (4) du premier conduit (2).

5. Ensemble de conduits creux (1) selon l'une quelconque des revendications 1 à 3, dans lequel le moyen de retenue (5) est configuré pour permettre un mouvement de rotation d'environ deux degrés un mouvement de translation d'environ 6 millimètres du deuxième conduit (3) par rapport au premier conduit (2).

6. Moteur comprenant un système d'alimentation en air comprenant une première extrémité reliée à la sortie d'un compresseur d'un turbocompresseur de suralimentation du moteur et une deuxième extrémité reliée à l'entrée d'un boîtier papillon du moteur, le système d'alimentation d'air comprenant un ensemble de conduits creux (1) selon l'une quelconque des revendications 1 à 4.

## Patentansprüche

1. Anordnung von Hohlleitungen (1), umfassend eine erste Hohlleitung (2) und eine zweite Hohlleitung (3), die durch teilweises Einpassen der zweiten Leitung (3) in einen Abschnitt (4) der ersten Leitung (2) zusammengebaut sind, die Anordnung von Leitungen (1) umfassend ein Mittel (5) zum Halten der ersten Leitung an der zweiten Leitung, wobei das Haltemittel (5) konfiguriert ist, um eine teilweise Drehbewegung und eine Translationsbewegung der zweiten Leitung (3) relativ zu der ersten Leitung (2) zu ermöglichen, das Haltemittel (5) umfassend einen Vorsprung (6), der an der zweiten Leitung (3) angeordnet ist, und ein Blockiermittel (7), das an der ersten Leitung (2) angeordnet ist, dieses Blockiermittel (7) umfassend einen ersten Schenkel (7a) und einen zweiten Schenkel (7b), die im Wesentlichen parallel zueinander sind, wobei der erste und der zweite Schenkel (7a und 7b) den Vorsprung (6) zwischen sich einschließen, **dadurch gekennzeichnet, dass** der erste Schenkel (7a) eine erste Haltelasche (10a) umfasst und der zweite Schenkel (7b) eine zweite Haltelasche (10b) umfasst, die geeignet sind, eine lokale Verengung des Raums (9) zwischen den Schenkeln (7a und 7b), in den der Vorsprung (6) eingeführt wird, zu bewirken und so das Entweichen des Vorsprungs (6) zwischen den Schenkeln (7a und 7b) zu verhindern.

2. Hohlleitungsanordnung (1) nach Anspruch 1, wobei der Vorsprung (6) ein zylindrischer Stift ist.

3. Hohlleitungsanordnung (1) nach Anspruch 2, wobei der Vorsprung (6) in Form eines Rotationszylinders vorliegt.

4. Hohlleitungsanordnung nach Anspruch 2, wobei der Vorsprung (6) eine erste Nase (11a) und eine zweite Nase (11b) umfasst, die durch ein gemeinsames Ende (12) miteinander verbunden sind, sodass der Vorsprung (6) eine "V"-Form aufweist, wobei das gemeinsame Ende (12) der zwei Nasen (11a und 11b) gegenüber dem Abschnitt (4) der ersten Leitung (2) angeordnet ist.

5. Hohlleitungsanordnung (1) nach einem der Ansprüche 1 bis 3, wobei das Haltemittel (5) konfiguriert ist, um eine Drehbewegung von etwa zwei Grad und eine Translationsbewegung von etwa 6 Millimetern der zweiten Leitung (3) relativ zu der ersten Leitung (2) zu ermöglichen.

6. Motor, umfassend ein Luftzufuhrsystem, umfassend ein erstes Ende, das mit dem Auslass eines Laders eines Turboladers des Motors verbunden ist, und ein zweites Ende, das mit dem Einlass eines Drosselklappenstutzens des Motors verbunden ist, das Luftzufuhrsystem umfassend eine Hohlleitungsanordnung (1) nach einem der Ansprüche 1 bis 4.

## Claims

1. Hollow duct assembly (1) comprising a first hollow duct (2) and a second hollow duct (3) assembled together by partially nesting the second duct (3) in a portion (4) of the first duct (2), the duct assembly (1) comprising a retaining means (5) for retaining the first duct with the second duct, whereby the retaining means (5) is configured to allow a partial rotational movement and a translational movement of the second duct (3) relative to the first duct (2), said retaining means (5) comprising a protrusion (6) arranged on the second duct (3) and a locking means (7) arranged on the first duct (2), this locking means (7) comprising a first limb (7a) and a second limb (7b) substantially parallel to each other, the first and the second limb (7a and 7b) gripping the protrusion (6) between them,
**characterized in that** the first limb (7a) comprises a first retaining tongue (10a) and the second limb (7b) comprises a second retaining tongue (10b), which tongues are capable of creating a local constriction of the space (9) between the limbs (7a and 7b) into which the protrusion (6) is introduced, and thus preventing the protrusion (6) from escaping from between the limbs (7a and 7b).

2. Hollow duct assembly (1) according to claim 1, wherein the protrusion (6) is a cylindrical pin.

3. Hollow duct assembly (1) according to claim 2, wherein the protrusion (6) is in the form of a cylinder of revolution.

4. Hollow duct assembly according to claim 2, wherein the protrusion (6) comprises a first lug (11a) and a second lug (11b) interconnected by a common end (12) such that the protrusion (6) is "V"-shaped, the common end (12) of the two lugs (11a and 11b) being arranged facing the portion (4) of the first duct (2).

5. Hollow duct assembly (1) according to any of claims 1 to 3, wherein the retaining means (5) is configured to allow a rotational movement of approximately two degrees and a translational movement of approximately 6 millimeters of the second duct (3) relative to the first duct (2).

6. Engine comprising an air supply system comprising a first end connected to the outlet of a compressor of a turbocharger of the engine and a second end connected to the inlet of a throttle body of the engine, the air supply system comprising a hollow duct assembly (1) according to any of claims 1 to 4.
